# EUROPEAN PATENT SPECIFICATION

(11) **EP 3 759 786 B1**
(45) Date of publication and mention of the grant of the patent: **25.11.2026**
(21) Application number: 19760128.9
(22) Date of filing: 01.03.2019
(51) Int. Cl.: G01V 3/10, H02J 4/25

(54) **METHOD FOR SECURING POWER IN REMOTE LOCATIONS AND APPARATUS THEREFOR**
VERFAHREN ZUR LEISTUNGSSICHERUNG AN ENTFERNTEN ORTEN UND VORRICHTUNG DAFÜR
PROCÉDÉ DE SÉCURISATION DE LA PUISSANCE DANS DES LIEUX ÉLOIGNÉS ET APPAREIL ASSOCIÉ

(30) Priority: 01.03.2018 US 201862636938 P
(43) Date of publication of application: 06.01.2021
(73) Proprietor: Crone Geophysics & Exploration Ltd., Mississauga ON L5N 6L5 (CA)
(72) Inventor: ABDELHADI, Abderrahim, York, Ontario M3H 3H8 (CA)
(74) Representative: Puchberger & Partner Patentanwälte
(86) International application number: PCT/CA2019/050250
(87) International publication number: WO 2019/165559

(56) References cited:
- AU-B2- 2015 249 137
- US-A1- 2003 169 045
- US-A1- 2004 027 129
- US-A1- 2006 284 728
- US-A1- 2008 284 441
- US-A1- 2010 268 470
- US-A1- 2012 175 962
- US-A1- 2012 256 568
- US-A1- 2015 061 607
- US-A1- 2015 102 671
- US-B2- 9 142 964

## Description

### FIELD

The invention relates to the field of portable power generation for use in mineral exploitation.

### BACKGROUND

It is known to carry out mineral surveys by passing current through a conductor near the ground to be surveyed and taking measurements associated with induced currents in the ground. Systems include, but are not limited to, electromagnetic (EM) systems, Time-domain Electromagnetic (TDEM) system, Induced Polarization (IP) systems and Resistivity systems. Historically, these systems used relatively low amounts of power, but demands have grown, and systems often require 15kW or more. The requirement to transport 15kW generators adds to the cost of surveying, especially in remote, mountainous areas.

US2008/0284441 A1 is directed to a geophysical system and method in which a transmitter coil is oriented with its axis horizontally, and a sensor is positioned below the coil to measure an ambient electrical and/or magnetic parameter associated with a conductive medium surrounding the at least one transmitter coil. The method involves providing a transmitter i.e. electric dipole exciter, with a horizontal axis, and providing a sensor i.e. H-field sensor, positioned below the transmitter to measure one of an ambient electrical and magnetic parameter associated with a conductive medium surrounding the transmitter. Electrical energy having a selected waveform is passed through the transmitter. A signal proportional to the measured one of an ambient electrical and magnetic parameter is received during passage of the electrical energy to the transmitter from the sensor.

US9142964 B2 concerns an electrical energy supply and distribution system. The system is able to handle both large centralised electricity generation plants, as well secondary energy sources which are becoming increasingly important. These sources may or may not be connected to deliver electrical energy to a 50 Hz AC power distribution grid. The system comprises a supply side where multiple electrical energy generators are connected via connections ports, involving conditioning circuitry, into a single DC electrical energy source. This energy source may be supplied to a common inverter system to convert it to AC for transmission on over a power grid. A rectifier may take the AC power from the grid and delivers it to loads. Whether an AC grid in involved or not, on the delivery side energy is delivered to multiple loads via connection ports involving conditioning circuitry. Any of the generators or loads may be taken offline or connected back into the system at will.

### SUMMARY OF THE INVENTION

The invention is defined in the independent claims. Advantageous embodiments are described in the dependent claims.

Advantages, features and characteristics of the invention will become evident upon a review of the detailed description, with reference to the appended drawing, the latter being briefly described hereinafter.

### BRIEF DESCRIPTION OF THE DRAWING

FIG. 1 is a block diagram showing an exemplary embodiment of the invention;
FIG. 2 is a view similar to FIG. 1;
FIG. 3 is a view of the waveform produced by the structure of FIG. 2 in use;
FIG. 4 is a closer view of the waveform of FIG. 3;
FIG. 5 shows the linear ramp current turn-off and showing the transmitter in operation at maximum peak current of 60A;
FIG. 6 shows the linear ramp current turn-off and showing the transmitter in operation at near peak voltage of 1000V and near peak power of 20kW; and

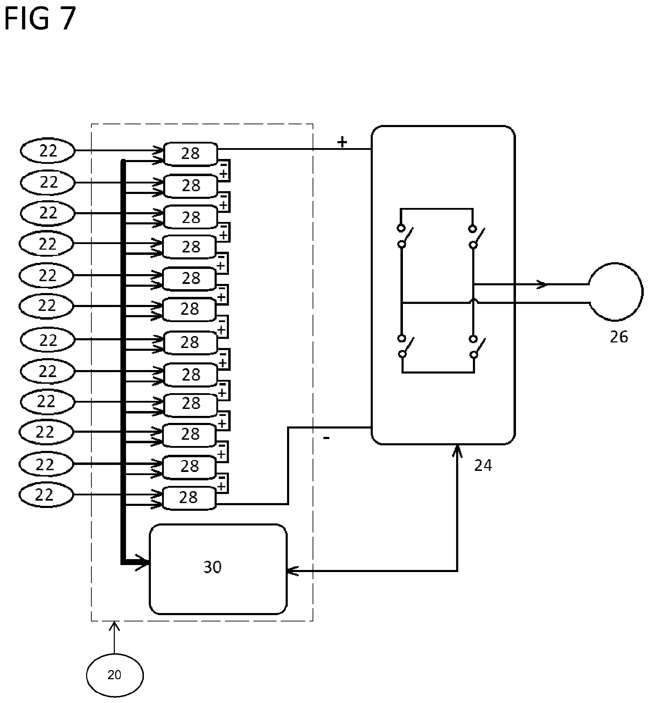

FIG. 7 shows yet another variant of FIG. 1.

### DETAILED DESCRIPTION

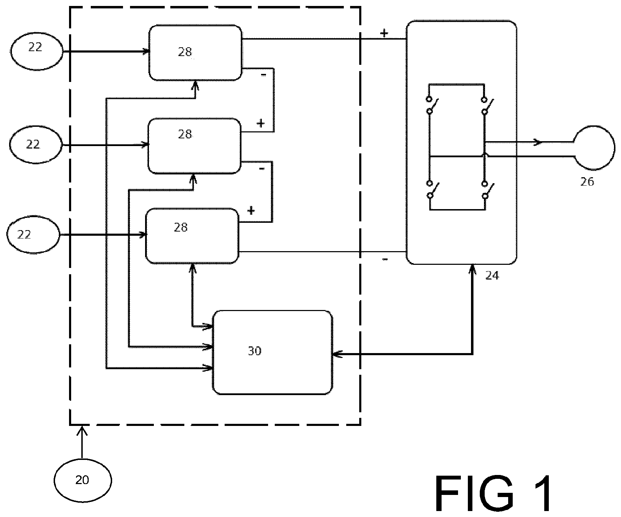

Reference is made to FIG. 1 which shows an exemplary embodiment of the invention in use which will be seen to include: apparatus 20; supplies of power, namely, generators 22; a transmitter 24; and a loop 26.

The apparatus 20 comprises: a power supply 28 provided for each of said generators and adapted to receive power therefrom; and circuitry 30 coupling the power supplies to one another and to the transmitter 24. The circuitry 30 includes a control board based on a processor which provides the necessary signals to control the transmitter and the power supplies.

Each power supply 28 is a nominal 5 kW power supply adapted to receive single phase AC power and produce DC power [170 VDC, 60A DC max].

Each generator is a 6 kW single phase AC generator, supplying 240V and up to 20 Amps.

The transmitter 24 is a 15kW transmitter, producing about 60A and 500VDC maximum and generates various waveforms.

The loop is a wire loop used for mineral explorations, more particularly, a TDEM loop.

Persons of ordinary skill will readily appreciate that:
- 5kW single phase AC generators are standard, off-the shelf units which can be purchased or rented throughout the world. Thus, if desired, a surveyor can ship only the transmitter, apparatus and loop to the destination of interest, and procure generators locally.
- carrying a 5 kW generator over rough terrain can be done, if necessary, by two men, whereas carrying a 15 kW generator practically requires mechanical assistance, such as a truck, which can be difficult in rough terrain, or a helicopter, which is very costly
- breakdown of a single 15 kW generator in a remote area would be problematic, whereas the likelihood of a problematic generator breakdown could be reduced to manageable levels in the context of the present apparatus merely by carrying a spare 5 kW generator.

Whereas a 15kw variant is shown in FIG. 1, it will be evident that variations are possible. For example:

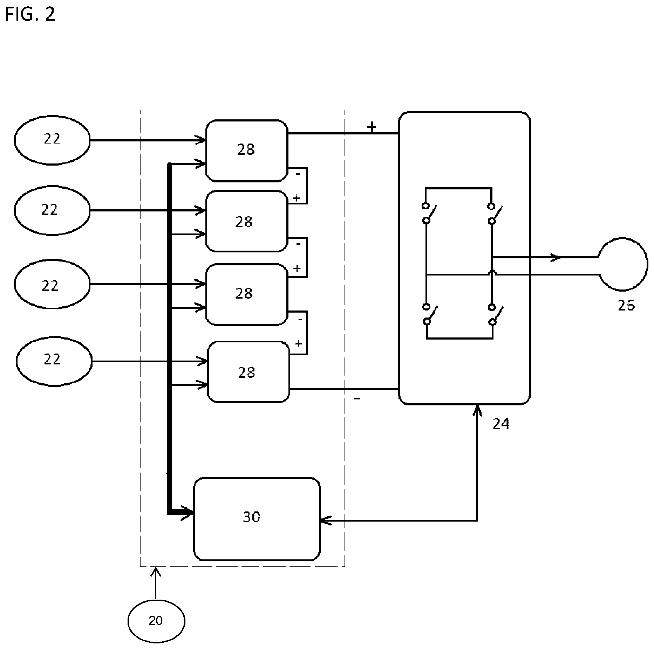

- FIG. 2 is a view similar to FIG. 1 showing a 20kw variant, constructed generally similarly to the 15kW and as such not described in detail;

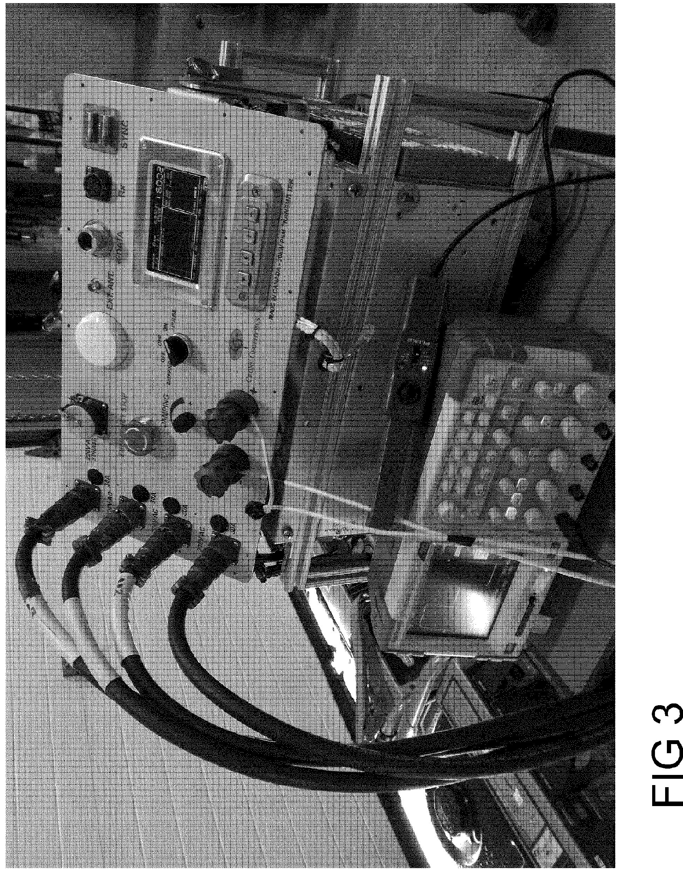

- FIG. 3 is a view of the waveform produced by the structure of FIG. 2 in use;

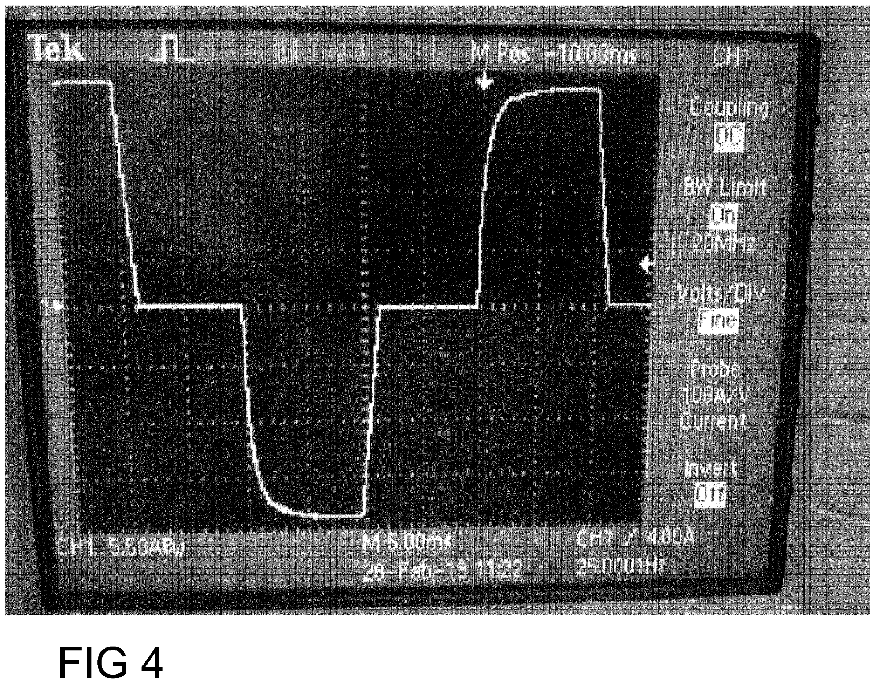

- FIG. 4 is a closer view of the waveform;

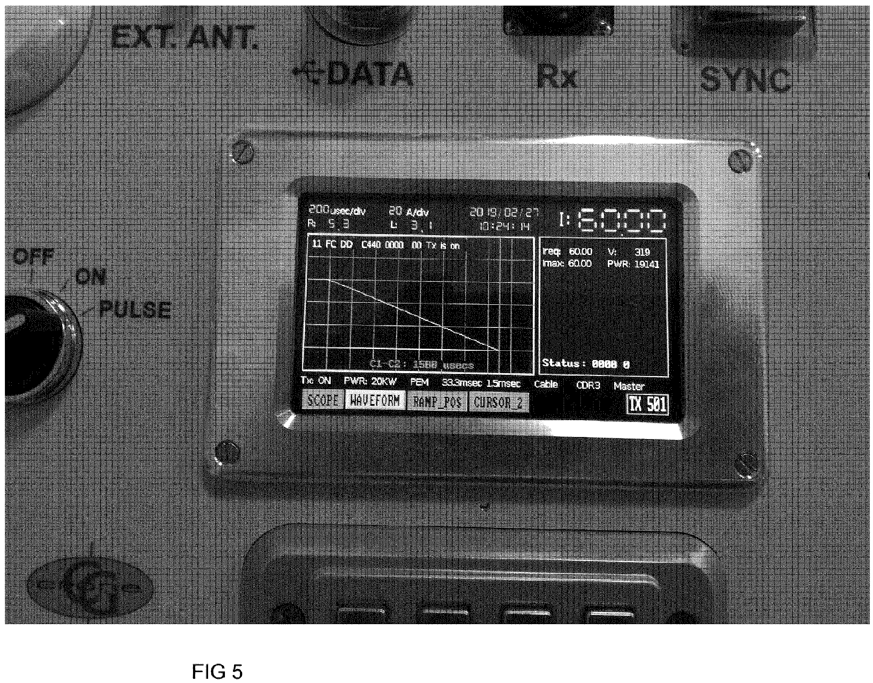

- FIG. 5 shows the linear ramp current turn-off and showing the transmitter in operation at maximum peak current of 60A; and

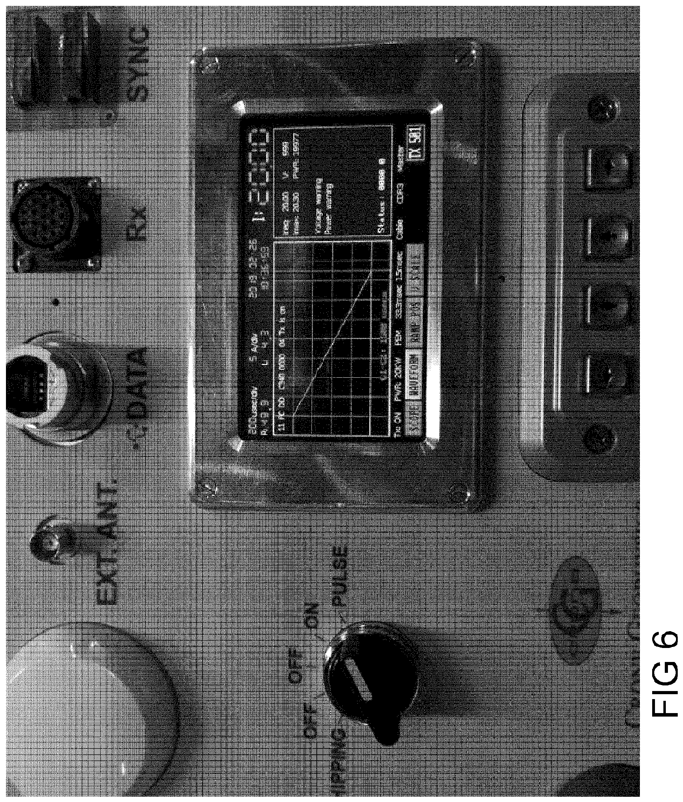

- FIG 6. Shows the linear ramp turn-off and showing the transmitter in operation at near peak voltage of 1000V and near peak power of 20kW.

Of course, yet further variations are possible. For example, FIG. 5 shows a 60kw variant, again, constructed generally similarly and as such not described in detail.

Whereas three specific embodiments are shown, further variations are possible.

For example, the input voltage to each power supply can be in the range of 180 to 264VAC, and at a frequency of 47 to 63 Hz.

As well, where available, a single 3-phase generator can also be used, which would supply power to all three power supplies.

Further, the apparatus can be varied to supply greater or lesser load power using greater or lesser number of differently-sized but widely-available generators [and an equal number of power supplies]. For example, 3.5 kW generators are also widely available such that a 10 kW load could be powered with three generators and a 15 kW load could be powered with five generators.

Yet further, not all power supplies have to be used if the transmitter is not operating at peak power.

Moreover, in an embodiment not covered by the scope of the claims, but kept in this description because of illustrative purposes, each power supply does not need to have a dedicated generator. One generator can supply multiple power supplies within the limits of its power output.

Additionally, the voltage limit could be extended to 1,000V, 2,000V, 5,000V or higher, and the current limit could be extended to 100A, 200A or higher with more or different power supplies, and with additional portable generators as needed.

Further, the output voltage from each power supply could vary. For example, for a 20kW unit, the output voltage of each 5 kW power supply could be about 250V DC, the total output voltage could be about 1000 VDC and each power supply would operate at about 20A.

Further, it will be understood that in the Time-domain EM (TDEM) method, the transmitter loop size, the loop location, and the peak current carried by the loop are very important survey parameters which must be considered carefully. Putting more current through the loop increases the primary magnetic field strength, which is generally a good thing as it creates stronger eddy currents in the ground which makes the secondary magnetic field stronger and easier to measure. However, changing the location or size of the loop is often more important, because the location determines the best coupling with the target conductor, and larger loop sizes produce primary magnetic fields that decrease more slowly with depth, so deep exploration requires the use of large loops. Accordingly, a single transmitter that can accommodate various loop sizes while maximizing peak current and portability is useful for TDEM.

The following examples show the flexibility of the system:
1. A survey might require only a small, 100m x 100m square transmit loop because only the top 100m of the earth is being explored. In this case, #10AWG wire would give 1.3 ohms resistance. This would require 60A peak current through this loop at 78V and 4.7kW of power. This could be accommodated through a single 5kW motor generator.
2. If anomalous readings are suspected to be caused by a deep conductor with the configuration described in 1., a follow-up survey might be started immediately by increasing the loop size to 400m x 400m which will produce a stronger primary field at greater depth, and therefore provide better definition of the target. There would be at least two options:
   2a) Maintain portability by using a single motor generator. The loop resistance for a 400m x 400m loop of #10 AWG wire would be 5.25 ohms, so 30 Amps could be put through it at 158V, requiring 4.7 kW of power, supplied by a single motor generator.
   2b) Maximize the current at 60A. The loop resistance would be 5.25 ohms, so 60 Amps could be put through it at 315V, requiring 18.9 kW of power, supplied by four motor generators.
3. If a greater depth of exploration is desired at this site with even larger loops, a single motor generator could supply 5kW power at 250V and 20 Amps. The resistive load of 12.5 ohms would allow a loop of size 900m x 900m to be used. Alternatively, the 900m x 900m loop could carry 25A (at 300V and 7.5 kW) by using two motor generators; 35A (at 420V and 14.7 kW) by using three motor generators; or 40A (at 480V and 19.2 kW) by using four motor generators.
4. If a very large loop is desired, #12 AWG wire might be used. With such wire, for example, a 2.5 km by 2.5 km square loop of wire would have a resistance of 52.5 ohms (as opposed to 33 ohms for #10 AWG wire), and 19A of current could be put through the loop at 998V and 18.9 kW power.

Important, the above examples show how a typical exploration program might evolve while the survey is progressing, and the 20 kW transmitter would be able to handle all of the changes to the survey parameters simply by bringing in additional off-the-shelf motor generators. Previously, different transmitters would have to be sourced and brought in, which would delay the program, and bringing in transmitters of 15kW or more would have added exorbitant costs if helicopter deployment had to be used due to access issues.

As a final example of the flexibility of the new 20 kW system, a situation might arise where access to the work site is not an issue, and a large, single 20 kW or larger motor generator is available to be used. In that case, the 20 kW transmitter could still be used, with each 5kW power supply powered by a separate cable to the large, single generator.

Finally, whereas the transmitter described is used with a Time-domain Electromagnetic (TDEM) system, other geophysical systems such as electromagnetic (EM) systems, Induced Polarization (IP) systems and Resistivity systems, can be so employed, defining embodiments not covered by the scope of the claims, but included in this description because of illustrative purposes.

## Claims

1. Apparatus (20) for use in mineral exploration, the apparatus (20) being adapted to be used with a transmitter (24) coupled to a wire loop (26) for mineral exploration as a load, wherein:
- the apparatus (20) is adapted to be used with a plurality of single-phase portable AC generators (22) as supplies of power, and
- that the apparatus (20) comprises a power supply (28) for each of said plurality of generators (22), the power supply (28) being coupled, in use, to said each generator (22) to receive power therefrom; and
- that the apparatus (20) comprises circuitry (30) coupling the power supplies (28) to one another and, in use, to the transmitter (24).

2. Apparatus (20) according to claim 1, **characterized in that** each power supply (28) is adapted to receive AC power and produce DC power.

3. Apparatus (20) according to claim 1 or 2, **characterized in that** each power supply (28) is adapted to receive single phase AC.

4. Apparatus (20) according to any of claims 1 to 3, **characterized in that** each power supply (28) is about a 5 kW power supply.

5. Apparatus (20) according any of claims 1 to 4, **characterized in that** each power supply (28) is rated for 170VDC and 60A DC.

6. Apparatus according to any of claims 1 to 5, **characterized in that** there are three power supplies (28).

7. Apparatus according any of claims 1 to 5, **characterized in that** there are four power supplies (28).

8. Apparatus according to any of claims 1 to 5, **characterized in that** there are five power supplies (28).

9. Use of the apparatus (20) according to any one of claims 1 to 8 with a transmitter (24) coupled to a wire loop (26) for mineral exploration.

10. Use according to claim 9 **characterized in that** the transmitter (24) is about a 15kW transmitter, producing about 60A and 500VDC maximum.

11. Use according to claim 9 or 10, **characterized in that** the transmitter (24) generates various current waveforms in a wire loop (26) for mineral exploration.

12. Use according to claim 11, **characterized in that** the loop (26) is a TDEM loop.

13. Use according to any one of claims 9 to 12, **characterized in that** a generator (22) is provided for, and defines each, supply of power.

## Patentansprüche

1. Vorrichtung (20) zur Verwendung bei der Mineralexploration, wobei die Vorrichtung (20) dafür ausgelegt ist, mit einem Sender (24) verwendet zu werden, der mit einer Drahtschleife (26) zur Mineralexploration als Last gekoppelt ist, wobei:
- die Vorrichtung (20) dafür ausgelegt ist, mit einer Vielzahl von einphasigen, tragbaren Wechselstromgeneratoren (22) als Stromquellen verwendet zu werden, und
- die Vorrichtung (20) für jeden der Vielzahl von Generatoren (22) eine Stromversorgung (28) umfasst, wobei die Stromversorgung (28) im Betrieb mit dem jeweiligen Generator (22) gekoppelt ist, um von diesem Strom zu beziehen; und
- die Vorrichtung (20) eine Schaltung (30) umfasst, die die Stromversorgungen (28) miteinander und im Betrieb mit dem Sender (24) koppelt.

2. Vorrichtung (20) nach Anspruch 1, **dadurch gekennzeichnet, dass** jede Stromversorgung (28) dazu ausgelegt ist, Wechselstrom zu beziehen und Gleichstrom zu erzeugen.

3. Vorrichtung (20) nach Anspruch 1 oder 2, **dadurch gekennzeichnet, dass** jede Stromversorgung (28) dazu ausgelegt ist, Einphasen-Wechselstrom zu beziehen.

4. Vorrichtung (20) nach einem der Ansprüche 1 bis 3, **dadurch gekennzeichnet, dass** jede Stromversorgung (28) eine etwa 5-kW-Stromversorgung ist.

5. Vorrichtung (20) nach einem der Ansprüche 1 bis 4, **dadurch gekennzeichnet, dass** jede Stromversorgung (28) für 170 V Gleichstrom und 60 A Gleichstrom bemessen ist.

6. Vorrichtung nach einem der Ansprüche 1 bis 5, **dadurch gekennzeichnet, dass** drei Stromversorgungen (28) vorhanden sind.

7. Vorrichtung nach einem der Ansprüche 1 bis 5, **dadurch gekennzeichnet, dass** vier Stromversorgungen (28) vorhanden sind.

8. Vorrichtung nach einem der Ansprüche 1 bis 5, **dadurch gekennzeichnet, dass** fünf Stromversorgungen (28) vorhanden sind.

9. Verwendung der Vorrichtung (20) nach einem der Ansprüche 1 bis 8 mit einem Sender (24), der mit einer Drahtschleife (26) zur Mineralexploration gekoppelt ist.

10. Verwendung nach Anspruch 9, **dadurch gekennzeichnet, dass** der Sender (24) ein etwa 15-kW-Sender ist, der maximal etwa 60 A und 500 V Gleichstrom erzeugt.

11. Verwendung nach Anspruch 9 oder 10, **dadurch gekennzeichnet, dass** der Sender (24) verschiedene Stromwellenformen in einer Drahtschleife (26) zur Mineralexploration erzeugt.

12. Verwendung nach Anspruch 11, **dadurch gekennzeichnet, dass** die Schleife (26) eine TDEM-Schleife ist.

13. Verwendung nach einem der Ansprüche 9 bis 12, **dadurch gekennzeichnet, dass** ein Generator (22) für jede Stromquelle vorgesehen ist und diese definiert.

## Revendications

1. Appareil (20) destiné à être utilisé dans le cadre de l'exploration minière, ledit appareil (20) étant adapté pour être utilisé avec un émetteur (24) couplé à une boucle filaire (26) destinée à l'exploration minière en tant que charge, dans lequel :
- l'appareil (20) est adapté pour être utilisé avec une pluralité de générateurs de courant alternatif monophasés portables (22) servant de sources d'alimentation, et
- l'appareil (20) comprend une alimentation électrique (28) pour chacun desdits générateurs (22), l'alimentation électrique (28) étant couplée, en utilisation, à chacun desdits générateurs (22) afin de recevoir de l'énergie de ceux-ci ; et
- l'appareil (20) comprend un circuit (30) reliant les alimentations électriques (28) entre elles et, en utilisation, à l'émetteur (24).

2. Appareil (20) selon la revendication 1, **caractérisé en ce que** chaque alimentation électrique (28) est adaptée pour recevoir du courant alternatif et produire du courant continu.

3. Appareil (20) selon la revendication 1 ou 2, **caractérisé en ce que** chaque alimentation électrique (28) est adaptée pour recevoir du courant alternatif monophasé.

4. Appareil (20) selon l'une des revendications 1 à 3, **caractérisé en ce que** chaque alimentation électrique (28) est une alimentation d'une puissance d'environ 5 kW.

5. Appareil (20) selon l'une des revendications 1 à 4, **caractérisé en ce que** chaque alimentation électrique (28) est calibrée pour 170 V CC et 60 A CC.

6. Appareil selon l'une des revendications 1 à 5, **caractérisé en ce qu'**il comporte trois alimentations électriques (28).

7. Appareil selon l'une des revendications 1 à 5, **caractérisé en ce qu'**il comporte quatre alimentations électriques (28).

8. Appareil selon l'une des revendications 1 à 5, **caractérisé en ce qu'**il comporte cinq alimentations électriques (28).

9. Utilisation de l'appareil (20) selon l'une des revendications 1 à 8 avec un émetteur (24) couplé à une boucle filaire (26) pour l'exploration minière.

10. Utilisation selon la revendication 9, **caractérisée en ce que** l'émetteur (24) est un émetteur d'une puissance d'environ 15 kW, produisant environ 60 A et 500 V CC au maximum.

11. Utilisation selon la revendication 9 ou 10, **caractérisée en ce que** l'émetteur (24) génère diverses formes d'onde de courant dans une boucle filaire (26) destinée à l'exploration minière.

12. Utilisation selon la revendication 11, **caractérisée en ce que** la boucle (26) est une boucle TDEM.

13. Utilisation selon l'une des revendications 9 à 12, **caractérisée en ce qu'**un générateur (22) est prévu pour chaque source d'alimentation et définit cette source d'alimentation.
